# EUROPEAN PATENT APPLICATION

(11) **EP 1 435 745 A1**
(43) Date of publication of application: **07.07.2004**
(21) Application number: 02293272.7
(22) Date of filing: 31.12.2002
(51) Int. Cl.: H04Q 7/38

(54) **Method and apparatus for communication channel allocation**

(71) Applicant: Motorola Inc., Schaumburg, IL 60196 (US)
(72) Inventor: Garani, Pradeep, Bilekahalli, Bangalore 560076 (IN); Gonorovsky, Ilya, East Brunswick NJ, 08816 (US); Meidan, Reuven, c/o Motorola, EIPO,, Basingstoke,RG21 7PL, Hampshire, (GB)
(74) Representative: Litchfield, Laura Marie

(57) **Abstract**

The invention relates to a system for allocating communication channels to communication units. A communication system comprises a communication channel allocator (207) that may allocate a communication channel to a first communication unit (205) for speech services. A speech interval controller (209) allocates the communication channel to a second communication unit (225) during a speech pause of the first communication unit (205). Also, a time interval allocator (211) allocates time intervals of the communication channels for transmission of an activity indication from the first communication unit (205). In response to receiving an activity indication in an activity indication time interval, a time slot controller (206) re-allocates the communication channel to the first communication unit (205). The invention is particularly applicable to cellular communication systems such as GSM based communication systems.

## Description

### Field of the invention

The invention relates to communication channel allocation in a communication system and in particular to a cellular communication system.

### Background of the Invention

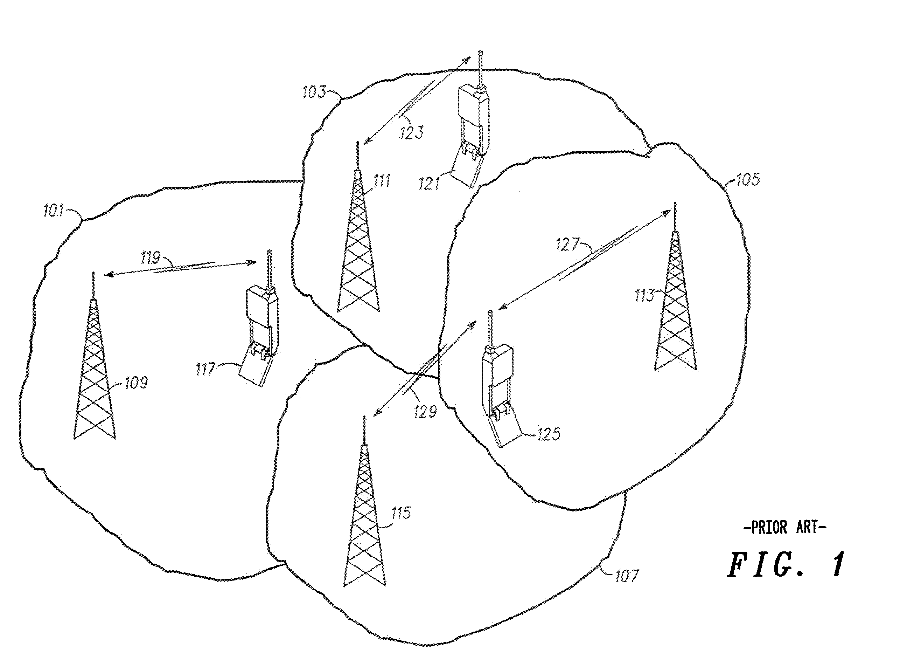

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 109, 111, 113, 115. A mobile station is served via a radio communication link by the base station of the cell within which the mobile station is situated. In the example of FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115, it enters a region of overlapping coverage of the two base stations 115 and 113, and within this overlap region, it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundreds or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition, the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently the most ubiquitous cellular communication system is the 2^{nd} generation communication system known as the Global System for Mobile communication (GSM). GSM uses a technology known as Time Division Multiple Access (TDMA) wherein user separation is achieved by dividing frequency carriers into 8 discrete time slots, which individually can be allocated to a user. A base station may be allocated a single carrier or a plurality of carriers. One carrier is used for a pilot signal that further contains broadcast information. This carrier is used by mobile stations for measuring the signal level of transmissions from different base stations, and the obtained information is used for determining a suitable serving cell during initial access or handovers. Further description of the GSM TDMA communication system can be found in 'The GSM System for Mobile Communications' by Michel Mouly and Marie Bernadette Pautet, Bay Foreign Language Books, 1992, ISBN 2950719007.

To further enhance the services and performance of the GSM communication system, a number of enhancements and additions have been introduced to the GSM communication system over the years.

One such enhancement is the General Packet Radio System (GPRS), which is a system developed for enabling packet data based communication in a GSM communication system. Thus, the GPRS system is compatible with the GSM (voice) system and provides a number of additional services including provision of packet data communication, which augments and complements the circuit switched communication of a traditional communication system. Furthermore, the packet based data communication may also support packet based speech services. The GPRS system has been standardised as an add-on to an existing GSM communication system, and can be introduced to an existing GSM communication system by introducing new network elements. Specifically, a number of Serving GPRS Support Nodes (SGSNs) and Gateway GPRS Support Nodes (GGSNs) may be introduced to provide a packet based fixed network communication.

Another enhancement is the Enhanced Data rate for GSM Evolution (EDGE) system, which comprises an air interface transmission protocol using a number of techniques to provide higher throughput over the air interface. Specifically, EDGE utilises higher order modulation schemes (8-PSK modulation), channel adaptation, Automatic Repeat Request (ARQ) schemes and incremental redundancy to provide a high data throughput. Furthermore, EDGE is particularly suited for packet based communication over the air interface.

In particular, a radio access network known as a GERAN (GSM/EDGE Radio Access Network) has been standardised. The GERAN allows for traditional GSM services to be provided as well as the enhanced services and performance provided by EDGE and GPRS.

In a typical two-way speech conversation, voice activity of each user typically comprises only around 30% of the total time. Hence, a typical mobile station in a speech call on average only transmits speech encoded signal for approximately 30% of the time, and likewise typically only receives speech for around 30% of the time. In order to increase battery life and reduce interference, a GSM mobile station or base station may during a speech pause enter a discontinuous transmission mode (DTX), wherein only a subset of the time slots are used for communicating data (SID frames). However, as the time slot is still allocated to the mobile station during the non-transmission time frames, no direct increase in the communication capacity of the communication system is achieved.

In order to increase the communication capacity of the system, it has for GERAN been suggested that the channel allocated to a speech service of first mobile station may be temporarily allocated to a second mobile station for a data service during a speech pause of the first mobile station. However, in order for this to be feasible and advantageous, a fast re-allocation of the channel is required at the onset of the speech pause as well as at the end of the speech pause.

Accordingly, it has been proposed that, the first mobile station simply transmits using the time slot of the communication channel when the speech pause ends. This will cause a collision between transmissions of the first and second mobile station. The base station accordingly needs to comprise circuitry for detecting a collision and for attempting to recover data of the transmissions despite the collision.

However, this detection and resolution of a collision requires complex signal processing and has a relatively high error probability. Specifically, it has been suggested to use joint detection to resolve collisions. However, joint detection is a complex process requiring significant computational and memory resources. It further has a non-zero error rate and therefore not only may the transmitted data be lost but the existence of a collision may not be detected. This may lead to further collisions and thus an increased error rate, reduced service and reduced communication capacity of the communication system.

It has also been proposed to provide dedicated access control channels on separate frequencies for collision resolution. This leads to a lower utilization of system resources.

An improved system for channel allocation would be an advantage, and especially reduced complexity and/or increased reliability of detecting the termination of a speech pause would be advantageous.

### Summary of the Invention

Accordingly the Invention seeks to mitigate, alleviate or eliminate one or more of the above mentioned disadvantages singly or in any combination.

Accordingly there is provided a communication system for supporting communication units over communication channels; the communication system comprising: means for allocating a first communication channel of a plurality of communication channels to a first communication unit for a speech service; means for allocating the first communication channel to a second communication unit during a speech pause of the first communication unit; means for allocating time intervals of at least one of the plurality of communication channels for communication of activity indications; means for receiving an activity indication from the first communication unit in the time intervals, the activity indication indicating speech activity at the first communication unit; and means for re-allocating the first communication channel to the first communication unit in response to receiving an activity indication.

The invention thus allows for an improved system for detecting speech activity and in response re-allocating a communication channel. Collisions may be avoided between two communication units using the first communication channel. The error rate associated with detection of speech activity may be significantly reduced, and the requirement of collision detection can be avoided. Hence, an improved system for sharing a communication channel between communication units may be implemented. The sharing may be effected at higher rate and/or accuracy and/or reduced error rates thereby allowing for an improved service to users and/or an increased performance and capacity of the communication system.

Specifically, the activity indication may be a speech resumption indication indicating that a speech pause or silence interval of the first communication unit is ending. The plurality of communication channels may for example in a GERAN system correspond to the eight time slots of a frame. The communication channel is preferably allocated to the second communication unit for a data transfer session. The communication channel may for example in other pauses be allocated to other communication units.

According to a feature of the invention the at least one of the plurality of communication channels includes the first communication link.

At least one of the time intervals may be a time interval of the first communication channel. The first communication channel may provide a communication means both for the first and second communication units as well as for activity indications from the first and/or other communication units.

According to another feature of the invention, the means for allocating a time interval is operable to alternately allocate the time interval on different communication channels of the plurality of communication channels.

A time interval may be used for communication of activity indications relating to a plurality of communication units, and the time intervals may be distributed over a plurality of communication channels. The reduction in communication capacity of each communication channel may be reduced thereby reducing a detrimental impact on each individual user. A single logical channel for activity indications may thus be provided from time intervals physically hopping across a plurality of communication channels.

According to another feature of the invention, the means for allocating time intervals is operable to cyclically alternate the allocation of the time interval on all of the plurality of communication channels. This allows for the effect of the time intervals to be substantially equally distributed across all of the plurality of communication channels.

According to another feature of the invention, the communication system further comprises means for creating the time intervals by a temporary compression of a communication signal of the at least one of the plurality of communication channels.

The transmission protocols may temporarily be changed to provide for the communication of a source signal to be performed in a reduced time interval, thereby freeing up a time interval that can be used as a time interval reserved for communication of activity indications. It thus allows for time intervals to be created in existing communication channels while reducing the impact on a source signal being communicated in the communication channel.

According to another feature of the invention, the temporary compression comprises a temporary use of a lower rate forward error correcting code.

The rate of the forward error correcting code may be lower than the error correcting code used when not performing the temporary compression. By using a lower rate forward error correcting code fewer channel bits are required to communicate the same number of information bits, and the transmission may thus be performed in a shorter time period thus allowing for a time interval with no communication. Hence, a time interval for activity indications may be created while still allowing for all information bits to be communicated.

According to another feature of the invention, the temporary compression comprises a temporary use of a reduced length interleaving. During the temporary compression a reduced length interleaving may be employed to suit a reduced communication time interval.

According to another feature of the invention, the temporary compression comprises temporarily reducing a source encoding data rate.

As a specific example, the source encoding rate of a speech vocoder may temporarily be reduced (or a second reduced rate vocoder may temporarily be used). In this case, the same source signal may be communicated in a shorter time interval thus freeing up a time interval for activity indications. The air interface transmission scheme may be unchanged and the characteristics of the channel bits of the air interface may be maintained thereby ensuring the same performance for the channel data communication. Furthermore, the quality impact of the source signal may be insignificant and may be more predictable than for other compression methods.

According to another feature of the invention, the time intervals are divided into a plurality of sub intervals and each sub interval is associated with one of the plurality of communication channels.

This allows for low complexity and highly reliable means of allowing for a plurality of activity indications to be communicated in a single time interval. It may also allow for a simple means of detecting from which communication unit the activity indication is received.

According to another feature of the invention, a transmission in a sub interval of the plurality of sub-intervals is an activity indication from the communication unit associated with the sub-interval. This allows for a simple activity indication that is easy to transmit and receive with high reliability.

According to another feature of the invention, the transmission comprises a frequency signal having a narrow bandwidth relative to a bandwidth of the plurality of communication channels. For example, an unmodulated carrier or a substantially sinusoidally modulated carrier may be communicated. This allows for an activity indication that can be easily created, and which may be easily detected with high reliability. Specifically, detection may be simply by use of a narrow frequency filter.

According to another feature of the invention, the sub-intervals are separated by a power ramping interval.

Preferably, each sub-interval is preceded and/or succeeded by a power up interval and/or a power down interval. A power ramping interval may simultaneously be a power up interval of one sub-interval and a power-down interval of the preceding sub-interval. Power ramping intervals allow for communication units to power up and down in order to transmit in the associated time interval while not substantially interfering with other sub-intervals.

According to another feature of the invention, the means for receiving an activity indication is operable to pre-set a receive gain in response to a received signal level from the first communication unit prior to the speech pause.

Typically, speech pauses are of relatively short duration and the propagation conditions of the time intervals are often correlated with the propagation conditions of the previous communication of speech. The activity indication is typically likely to be received at a signal level correlated with the signal level of the last speech communication. Presetting a receive gain may improve the initial reception and accelerate any gain adjustment.

According to another feature of the invention, the communication channels are time division multiple access (TDMA) communication channels.
Each of the plurality of communication channels may specifically be a given time slot in a TDMA frame.

According to another feature of the invention, the TDMA communication channels comprise a Global System for Mobile communication (GSM) time slot structure. Hence, the invention may advantageously be applied to systems based on a GSM time slot structure. It may thus be advantageously applied to GSM related systems such as GSM, EDGE and GERAN.

According to another feature of the invention, the TDMA communication channels comprise a GSM frame structure. Hence, the invention may advantageously be applied to systems based on a GSM frame structure. It may thus be advantageously applied to GSM related systems such as GSM, EDGE and GERAN.

According to another feature of the invention, the time intervals are time slots of the at least one of the plurality of communication channels. This may facilitate implementation. No other time slots need necessarily be affected by one time slot being used as a time interval for activity indications. It may provide for easy compatibility with for example an existing GSM related system.

According to another feature of the invention, the time intervals consist in one interval time slot in each speech interleaving frame.

According to another feature of the invention, the means for allocating time intervals is operable to allocate the interval time slot in different time slots in different speech interleaving frames.

For example, interleaving for a communication unit may be performed over N blocks, and the speech interleaving frame comprises N frames of time slots. In the first speech interleaving frame, a first time slot of the first frame may be used as a time interval for activity indications. The communication for any active user of the first time slot may be modified to be communication over the N-1 time slots of the subsequent time frames of the speech interleaving frame. In the next speech interleaving frame, the same process may be repeated but for a different time slot associated with a different user. This allows for a simple and easy to implement means of communicating activity indications and thus sharing communication channels, while maintaining an acceptable, low or even insignificant impact on the communication of the communication channels.

According to a second aspect of the invention, there is provided a base station operable to support communication units over communication channels; the base station comprising: means for communicating a channel allocation of a first communication channel of a plurality of communication channels to a first communication unit for a speech service; means for communicating with a second communication unit over the first communication channel during a speech pause of the first communication unit; means for reserving a time interval of at least one of the plurality of communication channels for communication of activity indications; means for receiving an activity indication from the first communication unit in the time interval, the activity indication indicating speech activity at the first communication unit; and means for re-allocating the first communication channel to the first communication unit in response to receiving an activity indication.

For example, the means for re-allocating the first communication channel to the first communication unit may be by modifying parameters of the receiving process from being associated with the second communication unit to being associated with the first communication unit.

According to a third aspect of the invention, there is provided a communication unit for a communication system supporting communication units over communication channels; the communication unit comprising: means for communicating a speech signal to a central communication unit over a first communication channel of a plurality of communication channels; means for entering a reduced transmission mode during a speech pause; means for transmitting an activity indication to the central communication unit in response to detection of speech activity during the speech pause; the transmission of the activity indication being during at least one time interval of at least one of the plurality of communication channels reserved for communication of activity indications; and means for exiting the reduced transmission mode.

The central communication unit may only function as a central communication unit for two or more communication units. Hence, the communication system may comprise a high number of central communication units each supporting a low number of communication units. Specifically, in a cellular communication system, the central communication unit may be a base station.

According to another feature of the invention, the communication unit further comprises means for creating a time interval of the first communication channel reserved for communication of activity indications by temporarily entering a compressed communication mode.

A source signal communicated by the communication unit may be temporarily compressed in comparison to the normal communication. The communication unit is preferably operable to change the transmission characteristics such that a source signal is transmitted over a reduced time interval thereby freeing up a time interval for activity indications.

According to another feature of the invention, the communication unit further comprises means for receiving a channel re-allocation message, and wherein the means for exiting the reduced transmission mode is operable to exit the reduced transmission mode in response to receiving a re-allocation message.

This provides a simple mechanism for the communication unit to begin speech transmission while allowing for a second communication unit utilising the first communication channel to first release the first communication channel. Specifically, the channel re-allocation message may be a periodically transmitted message comprising an indication of whether the first communication channel is currently available for the second communication unit. The indication may for example be a flag indicating that the channel may be used. For example, in a GERAN system, the channel re-allocation message may comprise the Uplink Status Flag.

According to another feature of the invention, the means for transmitting are operable to transmit a substantially sinusoidal signal as the activity indication.

This allows for a simple, easy to create activity indication which can be reliably detected by simple means. For example, a uniform pattern of all zero binary data values or all one binary data values may be communicated as a sine wave, thereby creating two distinct signals that can be reliably detected by the base station.

According to another feature of the invention, the means for transmitting is operable to transmit the activity indication using a timing advance substantially similar to a timing advance used for a previous speech transmission.

Typically, speech pauses are of relatively short duration and the location of the first communication unit is unlikely to change significantly during a speech pause. Accordingly, a timing advance of the time intervals is likely to be correlated with the timing advance of the previous speech communication. Hence, using this timing advance increases the probability of the activity indication being received at the central communication unit within an expected time interval.

According to another feature of the invention, the means for transmitting is operable to transmit the activity indication using a transmit power level substantially similar to a transmit power level used for a previous speech transmission.

Typically, speech pauses are of relatively short duration and the propagation conditions are often correlated with the propagation conditions of the previous speech communication. The activity indication is typically likely to experience a similar attenuation as the last speech communication. Using the same transmit power increases the probability of the activity indication being received with a suitable signal level.

According to a fourth aspect of the invention, there is provided a method of communication channel allocation in a communication system operable to support communication units over communication channels; the method comprising: allocating a first communication channel of a plurality of communication channels to a first communication unit for a speech service; allocating the first communication channel to a second communication unit during a speech pause of the first communication unit; allocating a time interval of at least one of the plurality of communication channels for communication of speech activity indications; receiving an activity indication from the first communication unit in the time interval indicating speech activity at the first communication unit; and re-allocating the first communication channel to the first communication unit in response to receiving an activity indication.

According to a fifth aspect of the invention, there is provided a method of communicating over a first communication channel in a communication system supporting a plurality of communication units over a plurality of communication channels; the method comprising the steps of: communicating a speech signal to a central communication unit over a first communication channel of the plurality of communication channels; entering a reduced transmission mode during a speech pause; transmitting an activity indication to the central communication unit in response to detection of speech activity, the transmission of the activity indication being during a time interval of at least one of the plurality of communication channels reserved for communication of activity indications; and exiting the reduced transmission mode.

### Brief Description of the Drawings

An embodiment of the invention will be described, by way of example only, with reference to the drawings, in which
FIG. 1 is an illustration of a cellular communication system in accordance with the prior art;
FIG. 2 is an illustration of a communication system in accordance with an embodiment of the invention;
FIG. 3 is an illustration of a time slot and frame structure for a carrier in accordance with an embodiment of the invention; and
FIG. 4 illustrates the structure of an activity indication time interval in accordance with an embodiment of the invention.

### Detailed Description of a Preferred Embodiment of the Invention

The following description focuses on an embodiment for a communication system using a GSM time and frame structure. However, it will be apparent that the invention is not limited to this application but may be applicable to many other communication systems.

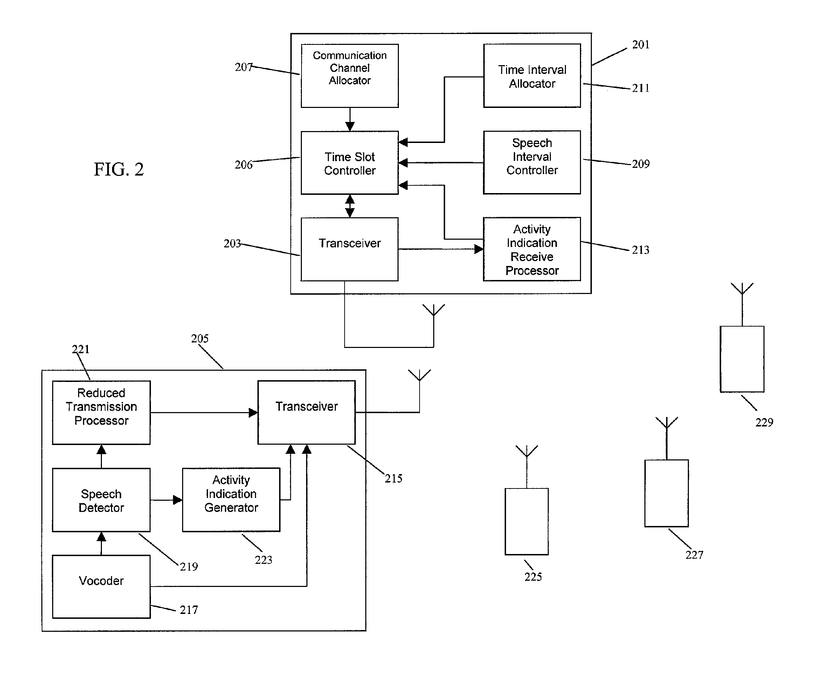

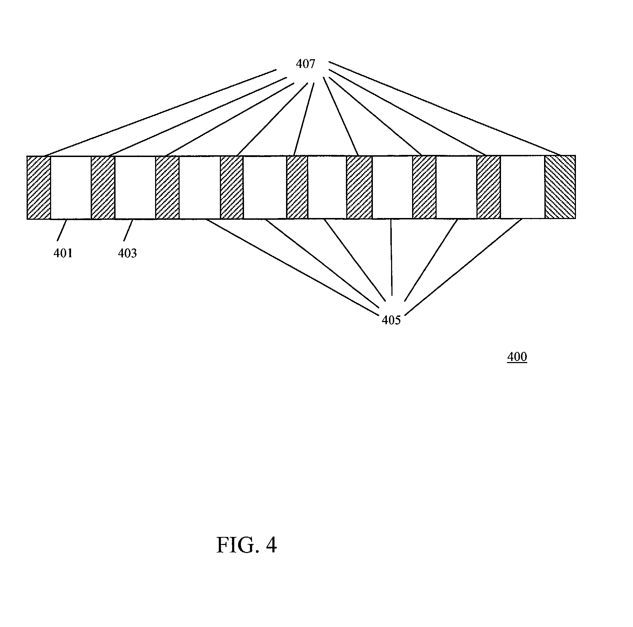

FIG. 2 is an illustration of a communication system in accordance with an embodiment of the invention.

The communication system of the FIG. 2 is a cellular communication system comprising a plurality of base stations, base station controllers, mobile switching centre(s), SGSN and GGSNs etc as is well known in the art. For clarity and brevity, FIG. 2 illustrates only one base station 201 of the fixed network.

The base station 201 comprises a transceiver 203, which is operable to communicate with a plurality of communication units in accordance with a GERAN air interface protocol. In the shown example, the base station is currently supporting four communication units 205, 225, 227, 229. A communication unit may specifically be a subscriber unit, a wireless user equipment, a mobile station, a communication terminal, a personal digital assistant, a laptop computer, an embedded communication processor or any other communication unit capable of communicating over the air interface.

The transceiver 203 comprises a receiver, a transmitter and all functionality required for communicating in accordance with the GERAN protocol. The transceiver 203 is connected to a time slot controller 206 that controls which information is transmitted in each time slot. Specifically, the time slot controller provides control signals to the transceiver 203 indicating for example which user a specific time slot is allocated to, whether it is a control burst or whether the specific time slot is reserved for transmission of activity indications from the communication units. In the preferred embodiment, the activity indications are speech activity indications and/or speech resumption activity indications indicating that the speech pause of a user has finished and that speech has been resumed.

The time slot controller 206 is connected to a communication channel allocator 207. The communication channel allocator 207 allocates communication channels to communication units, and specifically it is operable to allocate a first communication channel to a first communication unit 205 for providing a speech service. It should be noted, that the radio resource management, and thus the allocation of communication channels to communication units, in many communication systems may be allocated in other elements than a base station.

For example, typically for GSM and GERAN systems, the radio resource management is performed in the Base Station Controllers. The allocation performed by the communication channel allocator 207 may therefore specifically consist of receiving the communication channel allocation information from another unit and supplying the information to the time slot controller 206. In the preferred embodiment, the communication channel allocator 207 allocates a carrier and a specific time slot of the eight time slots available for the carrier.

The time slot controller 206 is further connected to a speech interval controller 209, which is operable to allocate a communication channel already in use for a speech service to a second communication unit for use during silence periods of the speech service. Hence, the communication channel allocator 207 may allocate a first communication channel to a first communication unit 205 for a speech service, and the speech interval controller 209 may allocate the same communication channel to a second communication unit 225 for use during one or more silence periods of the first communication unit 205.

Accordingly, the time slot controller 206 may allocate a given time slot to the first 205 or second communication unit 225 depending on whether a user of the first communication unit 205 is currently actively speaking.

The time slot controller 206 further controls the transceiver 203 to transmit control signals to at least the second communication unit 225 to provide information that it may transmit on the first communication channel. In a GERAN System, the USF (Uplink Status Flag) is used to command the second communication unit to transmit one block of data. The USF consists of three bits, giving eight possible combinations (communication units), which could be assigned for the particular time slot. The unit is allowed to transmit during the next block time interval if and only if the USF number that is transmitted in the downlink current block time interval matches the dedicated USF number for the unit. This number is provided at data session establishment time. Therefore, the second unit will be transmitting the data block by receiving the matched USF from the base station.

In the preferred embodiment, the base station 201 further comprises a time interval allocator 211 which allocates a time interval on one or more of the communication channels of the base station 201. Specifically, the time interval allocator 211 reserves a sequence of time slots of each carrier for communication of activity indications. The activity indication time slots are in the preferred embodiment alternated between all the time slots of a carrier.

Specifically, the time interval allocator 211 sends control signals to the time slot controller 206 indicating which time slots should be freed up to allow activity indications to be communicated. The control signals may relate to specific time slots, but in the preferred embodiment, the control signals comprise information of the activity indication time slot sequence from which the time slot controller 206 itself can determine which specific time slots must be kept free.

In the preferred embodiment, the communication units are provided with information of which time slots are reserved as activity indication time slots. The communication units are operable to refrain from transmitting during these time slots. Likewise, the base station modifies its operation during the activity indication time slots from receiving data or speech bursts to monitor the time slot for activity indications.

The base station 201 also comprises an activity indication receive processor 213 connected to the time slot controller 206 and the transceiver 203. The activity indication receive processor 213 monitors the received signal during activity indication time slots in order to detect any activity indications. If an activity indication is detected, the identity of the communication unit transmitting the activity indication is determined and fed to the time slot controller 206. In response, the time slot controller 206 reallocates the corresponding time slot to this communication unit and communicates this re-allocation to both the communication unit and to any other communication unit that may be using that communication channel.

At least some of the communication units of the communication system of FIG. 2 comprise functionality for transmitting activity indications. Specifically, FIG. 2 illustrates the functionality of a first communication unit 205.

The first communication unit 205 comprises a transceiver 215 which is operable to communicate with the base station in accordance with the appropriate GERAN protocol. In the preferred embodiment, the first communication unit 205 is operable to communicate with the base station 201 using both standard GSM or EDGE communication protocols.

The first communication unit 205 receives a voice input from a user. The voice input is fed to a vocoder 217 connected to the transceiver 215. The vocoded signal may be transmitted to the base station 201 over a communication channel whereby a speech communication is effected. The communication channel is specifically the carrier and time slot allocated by the communication channel allocator 207.

The vocoder 217 is further connected to a speech detector 219, which evaluates the output signal of the vocoder 217 in order to detect whether the generated signal comprises speech or is representative of background noise. Hence, the speech detector 219 determines if the user of the first communication unit 205 is currently speaking, or whether there is a speech pause.

The speech detector 219 is connected to a reduced transmission processor 221, which is further connected to the transceiver 215. When the speech detector detects a speech pause, it transmits a control signal to the reduced transmission processor 221. In response to this signal, the reduced transmission processor 221 enters the first communication unit 205 into a reduced transmission mode. Specifically, the first communication unit 205 is entered into a discontinuous transmission mode (DTX) such as that known from GSM. In this mode, the reduced transmission processor 221 controls the transceiver 215 such that no or only a subset of the time slots are used for transmitting data to the base station 201. In particular, only silence descriptor data (SID frames) are transmitted. In accordance with the DTX specification, only a subset of timeslots (for example every eighth time slot for Adaptive Multiple Rate (AMR) speech and more for GSM full rate speech) are used to communicate information (SID frames). As it is known which frames and time slots are used for communication of SID frames, allocation of these can be avoided by the base station and no dedicated activity indication is required for these frames.

When detecting that the first communication unit 205 enters the reduced transmission mode, the time slot controller 206 of the base station 201 may re-allocate the unused time slots to be used for communication with a different communication unit 225.

The speech detector 219 is further connected to an activity indication generator 223, which is further connected to the transceiver 215. When the speech detector 219 determines that the speech pause has ended, and thus that the vocoder 217 is generating actual speech data rather than background noise, a control signal is fed to the activity indication generator 223. In response, the activity indication generator 223 generates an activity indication and feeds this to the transceiver 215. The activity indication is transmitted to the base station 201 during an activity indication time slot, i.e. during one of the time slots that have been allocated for communication of activity indications.

When the base station 201 receives the activity indication, it re-allocates the communication channel to the first communication unit 205, by turning off the USF flag for the second unit. Alternatively, the base station may transmit a re-allocation message to the first communication unit 205 and any other communication unit that is using the communication channel during the speech pause. The re-allocation message may for example be broadcast.

The first communication unit simply proceeds to use the first communication channel without further signalling.

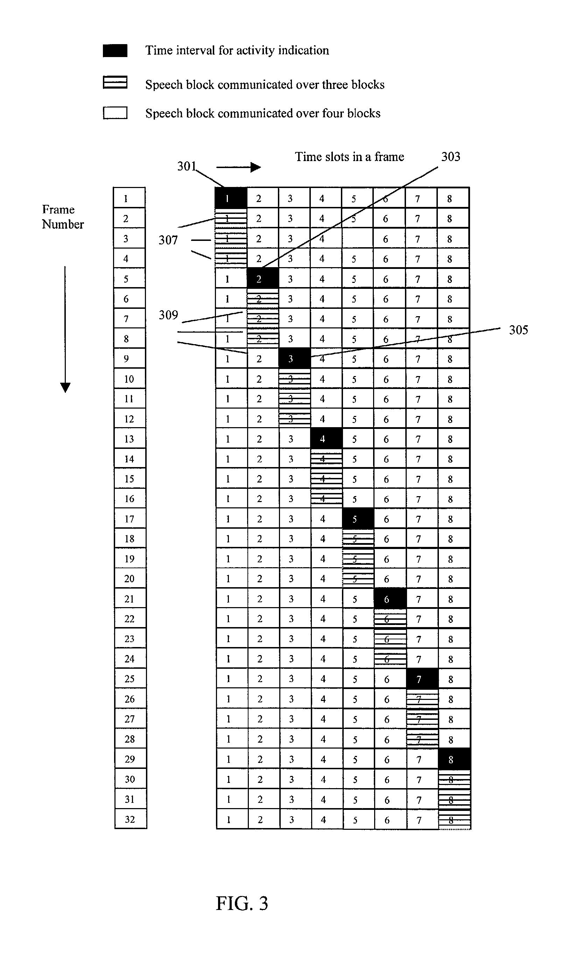

FIG. 3 is an illustration of a time slot and frame structure for a carrier in accordance with an embodiment of the invention.

The structure illustrated in FIG. 3 is compatible with a time slot and frame structure of a GSM or GERAN system. In the shown example, the carrier is a traffic carrier and does not comprise any pilot or beacon signals or information. FIG. 3 shows 32 consecutive frames of a carrier arranged vertically. Each of the frames comprises eight time slots shown horizontally. A communication channel consists of a specific time slot of each frame. Thus eight communication units may be accommodated by the carrier without sharing communication channels. Hence, the communication channel allocator 207 allocates one of the time slots 1-8 to a communication unit requesting a speech service. In the shown example, interleaving and error coding is performed on a block of four frames. Hence, in the specific example, the speech interleaving length is four frames corresponding to four time slots for each communication channel. Accordingly, a speech interleaving frame or block comprises four frames and 32 time slots in total.

In the example shown, a number of time slots have been reserved for communication of activity indications. Specifically, one time slot has been reserved in each speech interleaving frame or block. Furthermore, the time slots reserved for activity indications are alternately allocated on different communication channels, i.e. on different time slot numbers. In the preferred embodiment, the activity indication time slots are alternating over all communication channels and preferably the alternation is cyclical.

For example, in frame number 1, time slot no 1 301 is reserved for activity indications. In the next speech interleaving frame, time slot number 2 303 (of frame no. 5) is reserved for activity indications. In the third speech interleaving frame, time slot number 3 305 (of frame no. 9) is reserved for activity indications etc.

The activity indication time slots are thus rotated between the different time slot numbers of a frame and thus between the different communication channels. Hence, a time slot reserved for activity indications is guaranteed within each speech interleaving frame. The maximum delay from detection of speech activity to the opportunity of transmitting an activity indication is thus 32 time slots corresponding to four time slots for each communication channel. However, due to the alternation of the reserved activity indication time slots between communication channels, and despite the maximum delay of an activity indication being four communication channel time slots, only one time slot in 32 is lost to provide the activity indication time slots.

In a simple embodiment, an activity indication time slot is simply created by dropping the time slot that should otherwise have been sent, i.e. the transmission is simply omitted for this time slot. Due to the error correcting coding and the interleaving performed over four time slots, the underlying speech burst may in many cases be recoverable. However, a significantly increased data error rate and frame erasure rate is likely to occur.

In the preferred embodiment, the transmission protocol is changed for the communication channel in the speech interleaving frame comprising the activity indication time slot. Specifically, a temporary compression is introduced in order to transmit the communication signal in the reduced time interval. Thus, the transmission protocol is changed in the speech interleaving frame of a communication channel comprising the activity indication time slot, such that the information of the speech interleaving frame for that communication channel is communicated over three time slots rather than over four time slots.

As a specific example, FIG. 3 illustrates that the first time slot of frame 2,3 and 4 307 are transmitted using the temporary compression scheme during the first speech interleaving frame; the second time slot of frames 6,7 and 8 309 are transmitted using the temporary compression scheme during the second speech interleaving frame and so on.

In the preferred embodiment, the temporary compression comprises a temporary use of a lower rate forward error correcting code. Thus, in a normal GERAN system 112 information bits encoded with a punctured convolutional code are transmitted in each speech interleaving frame using 228 bits. During the compression a lower rate code may be used or equivalently the punctured convolutional code may be punctured to create a lower rate code. Thus, in this case the 112information bits may be communicated by a 2/3 rate code, using 168 bits thereby allowing the information bits to be communicated in three rather than four time slots.

In the preferred embodiment, the interleaving is furthermore changed for the speech interleaving frame of the communication channel comprising the activity indication time slot. Specifically, the interleaving length is changed such that the coded data is interleaved over the remaining three time slots rather than over four time slots.

Alternatively or additionally, the temporary compression may comprise temporarily reducing a source encoding data rate. Hence, the vocoder 217 may have a second reduced vocoding rate of ¾ of the normal encoding rate, and this encoding rate may be used for the communication channel in the speech interleaving frame comprising the activity indication time slot. Thus, fewer information bits need to be communicated in the three time slots, and the communication may thus use the same error correcting coding.

FIG. 4 illustrates the structure of an activity indication time interval 400 in accordance with a preferred embodiment of the invention. In the preferred embodiment, the activity indication time slots are divided into sub-intervals 401, 403, 405 where each sub-interval 401, 403, 405 is associated with one of the communication channels.

In the specific example of FIG.4, a first sub-interval 401 of the activity indication time slot 400 corresponds to time slot no. 1 of the frames, a second time slot 403 corresponds to time slot no. 2 of the frames etc.

In the preferred embodiment, an activity indication is simply transmitted from a communication unit by it transmitting a signal to be received at the base station 201 during the appropriate sub-interval. Preferably, the detection is a simple binary detection of whether a signal has been communicated during the sub-interval or not. Thus, the activity indication receive processor 213 will in each activity indication time slot determine whether a signal was received in sub-interval 1 401, in sub-interval 2 403 etc. If the presence of a signal is detected, the activity indication receive processor 213 considers this a valid activity indication from the communication unit associated with that sub-interval. Accordingly, it provides this information to the time slot controller 206 which proceeds to re-allocate the communication channel back to the communication unit.

The detection of a signal in a sub-interval may simply be determined from a consideration of the received signal level during the time slot. However, preferably the transmitted activity indication signal is a narrowband signal that can be filtered in a narrow filter prior to the detection. Specifically, the transmitted activity indication signal may be a substantially sinusoidally modulated signal or an unmodulated carrier. This improves the detection performance.

In the preferred embodiment, each sub-interval 401, 403, 405 is separated by at least one power ramping interval 407. The power ramping intervals 407 allow for a transmission power to ramp up or down outside of the sub-intervals 401, 403, 405, and thereby reduce the interference between sub-intervals and increase the probability of correct detection of activity indications in the sub-intervals.

In the preferred embodiment, the transceiver 203 of the base station 201 pre-sets the receive gain prior to receiving an activity indication signal. The receive gain is set to the gain that was used for the last speech transmission from the communication unit. Thus, the receive gain setting is stored in the transceiver 203 for each communication unit, and whenever an activity indication may be expected from a communication unit, the corresponding gain is retrieved and used to set the receive path gain. This increases the likelihood of the receive gain being correctly set and thus improves the detection probability. Additionally, the transmitting speech unit may be set up to transmit in more than one of its reserved sub-slots to further increase the probability.

Typically, speech pauses are relatively short and therefore the propagation characteristics often do not change dramatically during a speech pause. This is especially true for slow moving communication units. Therefore, the propagation dependent transmission characteristics used for the last speech communication by a communication unit entering the reduced transmission mode are preferably used for the activity indication transmission. Specifically, the timing advance and transmit power used for the activity indication transmission is preferably set to the same or similar values as those used by the communication unit immediately prior to entering the reduced transmit mode. This will increase the probability that the signal is received during a suitable time interval and at a suitable signal level.

The invention can be implemented in any suitable form including hardware, software, firmware or any combination of these. However, preferably, the invention is implemented as computer software running on one or more data processors. The elements and components of an embodiment of the invention may be located in the core network, the radio access network or any suitable physical or functional location. Indeed the functionality may be implemented in a single unit, in a plurality of units or as part of other functional units. As such, the invention may be implemented in a single unit or may be physically and functionally distributed in the network.

Although the present invention has been described in connection with the preferred embodiment, it is not intended to be limited to the specific form set forth herein. Rather, the scope of the present invention is limited only by the accompanying claims.

## Claims

1. A communication system for supporting communication units over communication channels; the communication system comprising:
- means for allocating a first communication channel of a plurality of communication channels to a first communication unit for a speech service;
- means for allocating the first communication channel to a second communication unit during a speech pause of the first communication unit;
- means for allocating time intervals of at least one of the plurality of communication channels for communication of activity indications;
- means for receiving an activity indication from the first communication unit in the time intervals, the activity indication indicating speech activity at the first communication unit; and
- means for re-allocating the first communication channel to the first communication unit in response to receiving an activity indication.

2. A communication system as claimed in claim 1, wherein the at least one of the plurality of communication channels include the first communication link.

3. A communication system as claimed in any previous claim, wherein the means for allocating a time interval is operable to alternately allocate the time interval on different communication channels of the plurality of communication channels.

4. A communication system as claimed in claim 3, wherein the means for allocating time intervals is operable to cyclically alternate the allocation of the time interval on all of the plurality of communication channels.

5. A communication system as claimed in any previous claim, further comprising means for creating the time intervals by a temporary compression of a communication signal of the at least one of the plurality of communication channels.

6. A communication system as claimed in claim 5, wherein the temporary compression comprises a temporary use of a lower rate forward error correcting code.

7. A communication system as claimed in of the any previous claims 5 and 6, wherein the temporary compression comprises a temporary use of a reduced length interleaving.

8. A communication system as claimed in any of the previous claims 5 to 7, wherein the temporary compression comprises temporarily reducing a source encoding data rate.

9. A communication system as claimed in any previous claim, wherein the time intervals are divided into a plurality of sub intervals and each sub interval is associated with one of the plurality of communication channels.

10. A communication system as claimed in any previous claim, wherein a transmission in a sub interval of the plurality of sub-intervals is an activity indication from the communication unit associated with the sub-interval.

11. A communication system as claimed in claim 10, wherein the transmission comprises a frequency signal having a narrow bandwidth relative to a bandwidth of the plurality of communication channels.

12. A communication system as claimed in of the any previous claims 9 to 11, wherein the sub-intervals are separated by a power ramping interval.

13. A communication system as claimed in any previous claim, wherein the means for receiving an activity indication is operable to pre-set a receive gain in response to a received signal level from the first communication unit prior to the speech pause.

14. A communication system as claimed in any previous claim, wherein the communication channels are time division multiple access (TDMA) communication channels.

15. A communication system as claimed in claim 14, wherein the TDMA communication channels comprise a Global System for Mobile communication (GSM) time slot structure.

16. A communication system as claimed in claim 15 wherein the TDMA communication channels comprise a GSM frame structure.

17. A communication system as claimed in claim 16 wherein the time intervals are time slots of the at least one of the plurality of communication channels.

18. A communication system as claimed in claim 17 wherein the time intervals consist in one interval time slot in each speech interleaving frame.

19. A communication system as claimed in claim 17 or 18 wherein the means for allocating time intervals is operable to allocate the interval time slot in different time slots in different speech interleaving frames.

20. A base station operable to support communication units over communication channels; the base station comprising:
- means for communicating a channel allocation of a first communication channel of a plurality of communication channels to a first communication unit for a speech service;
- means for communicating with a second communication unit over the first communication channel during a speech pause of the first communication unit;
- means for reserving a time interval of at least one of the plurality of communication channels for communication of activity indications;
- means for receiving an activity indication from the first communication unit in the time interval, the activity indication indicating speech activity at the first communication unit; and
- means for re-allocating the first communication channel to the first communication unit in response to receiving an activity indication.

21. A communication unit for a communication system supporting communication units over communication channels; the communication unit comprising:
- means for communicating a speech signal to a central communication unit over a first communication channel of a plurality of communication channels;
- means for entering a reduced transmission mode during a speech pause;
- means for transmitting an activity indication to the central communication unit in response to detection of speech activity during the speech pause; the transmission of the activity indication being during at least one time interval of at least one of the plurality of communication channels reserved for communication of activity indications; and
- means for exiting the reduced transmission mode.

22. A communication unit as claimed in claim 21 wherein the communication unit further comprises means for creating a time interval of the first communication channel reserved for communication of activity indications by temporarily entering a compressed communication mode.

23. A communication unit as claimed in claim 21 or 22, further comprising means for receiving a channel re-allocation message, and wherein the means for exiting the reduced transmission mode is operable to exit the reduced transmission mode in response to receiving a re-allocation message.

24. A communication unit as claimed in any of the previous claims 21 to 24, wherein the means for transmitting are operable to transmit a substantially sinusoidal signal as the activity indication.

25. A communication unit as claimed in any of the previous claims 21 to 24, wherein the means for transmitting is operable to transmit the activity indication using a timing advance substantially similar to a timing advance used for a previous speech transmission.

26. A communication unit as claimed in any of the previous claims 21 to 24, wherein the means for transmitting is operable to transmit the activity indication using a transmit power level substantially similar to a transmit power level used for a previous speech transmission.

27. A method of communication channel allocation in a communication system operable to support communication units over communication channels; the method comprising:
allocating a first communication channel of a plurality of communication channels to a first communication unit for a speech service;
allocating the first communication channel to a second communication unit during a speech pause of the first communication unit;
allocating a time interval of at least one of the plurality of communication channels for communication of speech activity indications;
receiving an activity indication from the first communication unit in the time interval indicating speech activity at the first communication unit; and
re-allocating the first communication channel to the first communication unit in response to receiving an activity indication.

28. A method of communicating over a first communication channel in a communication system supporting a plurality of communication units over a plurality of communication channels; the method comprising the steps of:
- communicating a speech signal to a central communication unit over a first communication channel of the plurality of communication channels;
- entering a reduced transmission mode during a speech pause;
- transmitting an activity indication to the central communication unit in response to detection of speech activity, the transmission of the activity indication being during a time interval of at least one of the plurality of communication channels reserved for communication of activity indications; and
- exiting the reduced transmission mode.
